# EUROPEAN PATENT APPLICATION

(11) **EP 4 657 605 A1**
(43) Date of publication of application: **03.12.2025**
(21) Application number: 25756431.0
(22) Date of filing: 07.01.2025
(51) Int. Cl.: H01M 10/54, H01M 4/58, H01M 4/36, B09B 3/40, B09B 3/35, H01M 10/052, C01B 25/37, H01M 4/02

(54) **METHOD FOR RECYCLING POSITIVE ELECTRODE ACTIVE MATERIAL AND POSITIVE ELECTRODE ACTIVE MATERIAL RECYCLED THEREBY**

(30) Priority: 29.02.2024 KR 20240029457; 29.02.2024 KR 20240029458
(71) Applicant: LG Energy Solution, Ltd., Seoul 07335 (KR)
(72) Inventor: PARK, Se Ho, Daejeon 34122 (KR); CHOI, Jeong Mi, Daejeon 34122 (KR); LEE, Jeongbae, Daejeon 34122 (KR); KIM, Yeon Jun, Daejeon 34122 (KR); SEO, Yongsik, Daejeon 34122 (KR); PARK, Gwangseon, Daejeon 34122 (KR)
(74) Representative: Hoffmann Eitle
(86) International application number: PCT/KR2025/000298
(87) International publication number: WO 2025/183344

(57) **Abstract**

The present invention relates to a method of recycling a cathode active material and a cathode active material recycled using the same. According to the present invention, during the recycling process, a single crystal structure is synthesized and, at the same time, trivalent iron is converted into divalent iron, so that no trivalent iron remains inside the recycled cathode active material, Accordingly, deterioration of battery performance may be prevented, lifespan characteristics may be excellent in a high-voltage environment, thermal stability may be increased, and the amount of gas generated during charging and discharging may be reduced.

## Description

### [Technical Field]

### [Cross-Reference to Related Applications]

This application claims priority to Korean Patent Application No. 10-2024-0029457, filed on February 29, 2024, Korean Patent Application No. 10-2024-0029458, filed on February 29, 2024, and Korean Patent Application No. 10-2025-0001945, re-filed on January 7, 2025, based on the priority of the above patents, in the Korean Intellectual Property Office, the disclosures of each of which are incorporated herein by reference.

The present invention relates to a method of recycling a cathode active material and a cathode active material recycled using the same. According to the present invention, by controlling atmosphere and temperature conditions in a step of desorbing and recovering a cathode active material from a waste cathode and a step of applying a coating agent to the recovered cathode active material and performing calcination, during the recycling process, a single crystal structure is synthesized and, at the same time, trivalent iron is converted into divalent iron, so that no trivalent iron remains inside the recycled cathode active material. Accordingly, deterioration of battery performance may be prevented, lifespan characteristics may be excellent in a high-voltage environment, thermal stability may be increased, and the amount of gas generated during charging and discharging may be reduced.

### [Background Art]

The demand for lithium secondary batteries has been continuously increasing along with the portable electronic device market since the 1990s. Recently, with the rapid growth of the electric vehicle market, the demand for lithium secondary batteries is rapidly increasing worldwide. This increase in demand for lithium secondary batteries could lead to instability in the supply and demand of lithium resources in the near future. In addition, the continuous accumulation of waste batteries could cause major environmental problems. To solve these problems, recycling of waste lithium secondary batteries is a very important technological challenge.

In general, a lithium secondary battery consists of a cathode formed by coating a metal foil, such as aluminum, with a cathode active material layer; an anode formed by coating a metal foil, such as copper, with an anode active material layer; a separator for preventing mixing of the cathode and anode; and an electrolyte solution that allows lithium ions to move between the cathode and anode. The cathode is manufactured by applying a cathode composition including a cathode active material, a binder, a conductive material, and a solvent to a current collector made of a metal foil such as aluminum, performing drying, and then performing pressure forming.

The cathode accounts for 60 % or more of the cost of a lithium secondary battery. The active materials of these cathodes include lithium cobalt oxide (LiCoO₂), lithium nickel cobalt manganese oxide (LiNiMnCoO₂), lithium manganese oxide (LiMnO₂), and lithium iron phosphate (LiFePO₄). Thereamong, lithium iron phosphate is increasingly being used as a raw material for large-capacity lithium secondary batteries used in electric vehicles due to the low unit price and stable supply thereof. Accordingly, various studies are being conducted on recycling processing technology to selectively recover valuable metals from cathodes of lithium secondary batteries that are discarded after use or cathode scraps generated during the lithium secondary battery manufacturing process (hereinafter referred to as "waste cathodes"), or to directly recover cathode active materials.

Methods (direct recycling methods) of directly recycling a cathode active material from a waste cathode without decomposing the cathode active material are being studied. As such methods, there are mainly four methods such as calcination, solvent dissolution, aluminum (Al) foil dissolution, and crushing & screening.

The calcination method can be performed in a simple process, but has disadvantages such as the formation of foreign substances on the surface of a recycled cathode active material, which degrades the rate performance of a battery. In addition, to the above disadvantages, waste gas is generated, and energy consumption is excessive.

In addition, when using the solvent dissolution method, a recycled cathode active material having a relatively clean surface may be obtained. However, since a solvent such as N-methyl-2-pyrrolidone (NMP) used to dissolve a binder is a toxic gas and has an explosion hazard, the method has poor stability and requires an expensive solvent recovery process.

In addition, in the case of the aluminum foil dissolution method, process stability is good, process cost is low, and binder removal is easy. However, foreign substances that are difficult to remove are formed on the surface of a recycled cathode active material, and there is a risk of explosion due to hydrogen gas generated in a process of removing aluminum foil.

In addition, the crushing & screening method can be performed through the simplest process among the above methods. However, it is difficult to completely separate a current collector and a cathode active material, the particle size distribution of the cathode active material is changed during a crushing process, and the battery characteristics of the recycled cathode active material are degraded due to a residual binder.

In particular, among waste cathodes, waste cathodes containing lithium iron phosphate as a cathode active material have a disadvantage in that, during the recycling process, particles having a polycrystalline structure are synthesized and trivalent iron particles are incorporated into lithium iron phosphate, which reduces the battery performance.

### [Related Art Documents]

### [Patent Documents]

Japanese Application Publication No. 2024-503575

### [Disclosure]

### [Technical Problem]

Therefore, the present invention has been made in view of the above problems, and it is one object of the present invention to provide a method of recycling a cathode active material and a recycled cathode active material. According to the present invention, by controlling atmosphere and temperature conditions in a step of desorbing and recovering a cathode active material from a waste cathode and a step of applying a coating agent to the recovered cathode active material and performing calcination, during the recycling process, a single crystal structure is synthesized and, at the same time, trivalent iron is converted into divalent iron, so that no trivalent iron remains inside the recycled cathode active material, Accordingly, deterioration of battery performance may be prevented, lifespan characteristics may be excellent in a high-voltage environment, thermal stability may be increased, and the amount of gas generated during charging and discharging may be reduced.

The above and other objects can be accomplished by the present invention described below.

### [Technical Solution]

I) In accordance with one aspect of the present invention, provided is a method of recycling a cathode active material, the method including (a) recovering a cathode active material by heat-treating a waste cathode including a current collector and a cathode active material layer formed on a surface thereof under an oxidizing atmosphere;
   (b) adding a coating agent to the recovered cathode active material and performing calcination under a reducing atmosphere to form a coating layer on a surface of the cathode active material, convert a trivalent iron compound in the cathode active material into a divalent iron compound, and convert polycrystalline particles into a single crystal cathode active material; and
   (c) controlling a particle size of the cathode active material by milling the cathode active material having the coating layer formed thereon, in which the trivalent iron compound is converted into the divalent iron compound.
II) According to I), step (a) may include performing primary heat treatment at 300 to 500 °C under an oxidizing atmosphere; and performing secondary heat treatment at 500 to 700 °C under an oxidizing atmosphere after the primary heat treatment.
III) According to I) to II), the primary heat treatment may be performed for 30 minutes to 10 hours, and the secondary heat treatment may be performed for 30 minutes to 10 hours.
IV) According to I) to III), step (b) may include adding a coating agent to the recovered cathode active material and performing preliminary milling; spray-drying the preliminary-milled cathode active material; and calcining the spray-dried cathode active material at 710 to 900 °C under a reducing atmosphere.
V) According to I) to IV), the coating agent may include one or more of a metal, an organic metal, and a carbon component, preferably a carbon component, more preferably one or more selected from sucrose, glucose, graphite, polyvinylidene fluoride (PVDF), polyethylene glycol (PEG), citric acid, polyvinyl alcohol (PVA), graphene, and fructose.
VI) According to I) to V), the calcination may be performed for 1 to 24 hours.
VII) According to I) to VI), the preliminary milling may be performed using a ball mill, a high-energy ball mill, a vibrating mill, or a roll-mill.
VIII) According to I) to VII), the preliminary milling may be performed at a stirring speed of 50 to 500 rpm for 2 to 24 hours.
IX) According to I) to VIII), in step (c), the milling may be performed using a jet mill.
X) According to I) to IX), in step (c), the milling may be performed under air or an inert atmosphere.
XI) According to I) to X), the cathode active material may be represented by Chemical Formula 1 below.

   [Chemical Formula 1] Li₁₋ₐMₐFe_{1-b}N_{b}P_{1-c}X_{c}O_{4-d}Y_{d},

   wherein M includes one or more elements selected from the group consisting of Nb, Al, Na, Ti, Zr, and K; N includes one or more elements selected from the group consisting of Mo, V, Mn, Sm, Eu, Yb, Cu, Mg, Ni, and Co; X includes Si; Y includes one or more elements selected from the group consisting of F, S, and N; and a, b, c, d are 0≤a<1, 0≤b<1, 0≤c<1, 0≤d<4, respectively.
XII) According to I) to XI), the cathode active material may be composed of 99 mol% or more or 100 mol% of a single crystal.
XIII) According to I) to XII), based on 100 mol% in total of the divalent and trivalent iron compounds, the cathode active material may include the trivalent iron compound in an amount of less than 1 mol% or 0 mol% according to XRD analysis or electron paramagnetic resonance (EPR) analysis.
XIV) In accordance with another aspect of the present invention, provided is a recycled cathode active material represented by Chemical Formula 1 below and composed of 99 mol% or more or 100 mol% of a single crystal.

   [Chemical Formula 1] Li₁₋ₐMₐFe_{1-b}N_{b}P_{1-c}X_{c}O_{4-d}Y_{d},

   wherein M includes one or more elements selected from the group consisting of Nb, Al, Na, Ti, Zr, and K; N includes one or more elements selected from the group consisting of Mo, V, Mn, Sm, Eu, Yb, Cu, Mg, Ni, and Co; X includes Si; Y includes one or more elements selected from the group consisting of F, S, and N; and a, b, c, d are 0≤a<1, 0≤b<1, 0≤c<1, 0≤d<4, respectively.
XV) In accordance with yet another aspect of the present invention, provided is a secondary battery including the recycled cathode active material.

### [Advantageous Effects]

According to the present invention, the present invention has an effect of providing a method of recycling a cathode active material. According to the method of the present invention, during a recycling process, a single crystal structure is synthesized and, at the same time, trivalent iron is converted into divalent iron, so that no trivalent iron remains inside the recycled cathode active material. Accordingly, deterioration of battery performance can be prevented, lifespan characteristics can be excellent in a high-voltage environment, thermal stability can be increased, and the amount of gas generated during charging and discharging can be reduced.

In addition, the present invention has an effect of providing a method of recycling a cathode active material that significantly improves both economy and productivity by directly recycling a cathode active material without decomposition in a simple and environmentally friendly way.

### [Description of Drawings]

FIG. 1 is a scheme of the cathode active materials recycled in Example 2 according to the present invention and Comparative Examples 3 and 4.
FIG. 2 includes TEM images of the cathode active materials recycled in Example 1 and Comparative Examples 1 and 2.
FIG. 3 shows the TEM images and electron diffraction pattern (EDP) images of the cathode active materials recycled in Example 2 and Comparative Example 3.
FIG. 4 shows the TEM images and TEM-EDS mapping images of the cathode active material recycled in Comparative Example 4.
FIG. 5 shows the XRD graphs of the cathode active materials recycled in Example 2 and Comparative Examples 3 and 4.
FIG. 6 shows the XPS graphs of the cathode active materials recycled in Example 2 and Comparative Examples 3 and 4.
FIG. 7 shows the EPR graphs of the cathode active materials recycled in Example 2 and Comparative Examples 3 and 4.
FIG. 8 is a diagram comparing the electrochemical performance, including rated voltage, energy capacity, CHC capacity retention rate, and 45 °C lifespan capacity, of the cathode active materials recycled in Example 1 and Comparative Examples 1 and 2.
FIG. 9 is a diagram comparing the electrochemical performance, including energy capacity and CHC capacity retention rate, of a fresh cathode active material or the cathode active materials recycled in Example 2 and Comparative Examples 3 and 4.

In the drawing, Ref represents Comparative Example 1, 700C represents Comparative Example 2, 800C represents Example 1, a) represents Example 2, b) represents Comparative Example 3, and c) represents Comparative Example 4, respectively.

### [Best Mode]

The present inventors have been studying a method (direct recycled method) of directly recycling a waste cathode material without decomposing the waste cathode material to obtain a cathode material having excellent battery performance. During the study, the present inventors confirmed that, when controlling atmosphere and temperature conditions in a step of desorbing and recovering a cathode active material from a waste cathode and a step of applying a coating agent to the recovered cathode active material and performing calcination, during the process of recycling the cathode active material, a single crystal structure was synthesized and, at the same time, trivalent iron was converted into divalent iron, so that no trivalent iron remained inside the recycled cathode active material. As a result, deterioration of battery performance was prevented, lifespan characteristics were excellent in a high-voltage environment, thermal stability was increased, and the amount of gas generated during charging and discharging was reduced. Based on these results, the present inventors conducted further studies to complete the present invention.

In the present disclosure, the active material layer of a waste cathode may include a cathode active material, a binder, and a conductive material.

In the present disclosure, the "oxidizing atmosphere" may be specifically air or an atmosphere having a purity of 30 % or more of oxygen.

In the present disclosure, unless otherwise specified, the "trivalent iron compound" may include Li₃Fe(PO₄)₃ and Fe₂O₃, without being limited thereto.

In the present disclosure, the fresh cathode active material means a newly prepared cathode active material that is not recovered from a waste battery or obtained by recycling a waste battery.

Hereinafter, a cathode active material of the present invention, a method of recycling a cathode active material, and a secondary battery will be described in detail.

The terms and words which are used in the present specification and the appended claims should not be construed as being confined to common meanings or dictionary meanings but should be construed as meanings and concepts matching the technical spirit of the present invention in order to describe the present invention in the best fashion. In addition, since the configurations shown in the examples and drawings of this specification are only embodiments of the present invention, and do not represent all the technical spirit of the present invention, it should be understood that there are many equivalents and variations that may be substituted for the above configurations, and that the present invention may be arranged, substituted, combined, separated, or designed in various other configurations.

Unless otherwise defined, all technical and scientific terms used in this description have the same meaning as commonly understood by those of ordinary skill in the art to which the present invention pertains.

### Method of recycling a cathode active material

A method of recycling a cathode active material of the present invention includes step (a) of recovering a cathode active material by heat-treating a waste cathode including a current collector and a cathode active material layer formed on a surface thereof under an oxidizing atmosphere; step (b) of adding a coating agent to the recovered cathode active material and performing calcination under a reducing atmosphere to form a coating layer on the surface of the cathode active material, convert a trivalent iron compound in the cathode active material into a divalent iron compound, and convert polycrystalline particles into a single crystal cathode active material; and step (c) of controlling the particle size of the cathode active material by milling the cathode active material having the coating layer formed thereon, in which the trivalent iron compound is converted into the divalent iron compound. In this case, the crystal structure of a single crystal may be recovered, and at the same time, a trivalent iron generated during the recycling process may be completely converted into a divalent iron. Accordingly, excellent charge capacity, resistance characteristics, and capacity characteristics may be realized.

Hereinafter, each step of the method of recycling a cathode active material will be described in detail.

### (a) Recovering a cathode active material

In the present invention, the method of recycling a cathode active material includes a step of heating a waste cathode including a current collector and a cathode active material layer formed thereon under an oxidizing atmosphere. In this case, recovery may be easily performed, and the purity of a recovered cathode active material may be increased.

The waste cathode may be preferably a cathode separated from a secondary battery discarded after use, a defective cathode sheet or cathode scrap generated in the secondary battery manufacturing process, or a cathode sheet or cathode scrap discarded after cutting. For example, in the case of cathode scrap generated during the manufacturing process, excellent battery characteristics may be achieved because there is no loss of lithium ions in a cathode active material.

The secondary battery may preferably be a lithium secondary battery.

In the present disclosure, the olivine structure is a type of crystal structure of a cathode active material, and is a 3D hexahedral lattice structure. In that structure, P-O (phosphorus-oxygen) is strongly bonded, so that the structure may be maintained even when all lithium ions are lost. Accordingly, performance degradation due to charging and discharging may be prevented, and thermal stability may be excellent. Compared to other cathode active materials, cathode active materials with the olivine structure have disadvantages such as low energy density, low electrical conductivity, and low lithium ion diffusion, but the cathode active materials have great economic advantages because inexpensive iron is used instead of expensive cobalt.

The olivine structure may be confirmed by measurement methods commonly practiced in the technical field to which the present invention belongs, as a specific example, by X-ray diffraction analysis (XRD).

For example, the cathode active material having an olivine structure may include a compound represented by Chemical Formula 1 below. In this case, high-temperature stability, lifespan characteristics, and economy may be excellent.

[Chemical Formula 1] Li₁₋ₐMₐFe_{1-b}N_{b}P_{1-c}X_{c}O_{4-d}Y_{d}

In Chemical Formula 1, M includes one or more elements selected from the group consisting of Nb, Al, Na, Ti, Zr, and K; N includes one or more elements selected from the group consisting of Mo, V, Mn, Sm, Eu, Yb, Cu, Mg, Ni, and Co; X includes Si; Y includes one or more elements selected from the group consisting of F, S, and N; and a, b, c, d are 0≤a<1, 0≤b<1, 0≤c<1, 0≤d<4, respectively.

In Chemical Formula 1, a, b, c, d may be 0≤a≤0.5, 0≤b≤0.5, 0≤c≤0.5, 0≤d≤0.1, respectively.

The compound represented by Chemical Formula 1 may be preferably lithium iron phosphate. In this case, high-temperature stability, lifespan characteristics, and economy may be excellent.

The lithium iron phosphate may include preferably LiFePO₄ having an olivine structure. In this case, high-temperature stability, lifespan characteristics, and economy may be excellent.

For example, the conductive material may be a carbon-based conductive material, preferably carbon black, CNT, or a mixture thereof.

For example, the binder may be a polymer binder, preferably polyvinylidene fluoride (PVdF), acrylonitrile-butadiene rubber (NBR), or a mixture thereof, more preferably polyvinylidene fluoride.

For example, the active material layer of the waste cathode may include a solvent. The solvent may be used to mix a cathode active material, a binder, and/or a conductive material, and may be a solvent commonly used in the technical field to which the present invention belongs. For example, the solvent may include one or more selected from the group consisting of dimethyl sulfoxide (DMSO), isopropyl alcohol, N-methyl-2-pyrrolidone (NMP), acetone, and water.

For example, the active material layer of the waste cathode may further include a dispersant.

For example, the dispersant may include one or more selected from the group consisting of cellulose compounds, polyalkylene oxide, polyvinyl alcohol, polyvinyl pyrrolidone, polyvinyl acetal, polyvinyl ether, polyvinyl sulfonic acid, polyvinyl chloride (PVC), polyvinylidene fluoride, chitosan, starch, amylose, polyacrylamide, poly-N-isopropylacrylamide, poly-N,N-dimethylacrylamide, polyethyleneimine, polyoxyethylene, poly(2-methoxyethoxyethylene), poly(acrylamide-co-diallyldimethylammonium chloride), acrylonitrile-butadiene-styrene (ABS) copolymers, acrylates-styrene-acrylonitrile (ASA) copolymers, mixtures of acrylate-styrene-acrylonitrile (ASA) copolymers and propylene carbonate, styrene-acrylonitrile (SAN) copolymers, and methyl methacrylate-acrylonitrile-butadiene-styrene (MABS) copolymers.

For example, step (a) of recovering a cathode active material may include step (a1) of performing primary heat treatment at 300 to 440 °C under an oxidizing atmosphere; and step (a2) of performing secondary heat treatment at 500 to 650 °C under an oxidizing atmosphere after the primary heat treatment. In this case, foreign substances such as a binder and a conductive material contained in the active material of the waste cathode may be easily removed, and a cathode active material precursor may be recovered in high yield, which may be simply called a 'desorption process'.

In the present disclosure, the cathode active material precursor is proposed to be distinguished from the final recycled cathode active material after the calcination and milling process following desorption, and refers to a material that may provide the final recycled cathode active material through calcination and milling treatment.

The heat treatment method is not particularly limited as long as the heat treatment method is a method commonly practiced in the technical field to which the present invention belongs, and the heating rate and heating time may be appropriately adjusted as needed.

As a preferred example, step (a) of recovering a cathode active material may include step (a1) of performing primary heat treatment at 350 to 440 °C under an oxidizing atmosphere; and step (a2) of performing secondary heat treatment at 520 to 630 °C under an oxidizing atmosphere after the primary heat treatment. At this time, the primary heat treatment temperature may be lower than the secondary heat treatment temperature. In this case, a binder and a conductive material may be easily removed during the process of recovering a cathode active material from a waste cathode. In addition, foreign substances such as aluminum introduced from a current collector may be easily removed. Thus, a high-purity cathode active material may be recovered.

As a preferred example, according to the present invention, as described above, after preliminary desorption by oxidizing and heat-treating a waste cathode within a low temperature range, cathode active material powder containing the preliminary desorbed cathode active material may be subjected to oxidation and heat treatment again at a high temperature to complete the desorption process. In this case, the residual amount of metal flowing from a current collector may be significantly reduced without a separate pretreatment process to separate or remove the current collector. Thus, the purity of the cathode active material may be increased, and process simplification may be implemented.

More specifically, in the recovery process for desorbing and recovering a cathode active material from a waste cathode, heat treatment may be performed in two stages under predetermined temperature conditions and higher temperature conditions as described above. In this case, metallic foreign substances that may flow from the current collector during the primary heat treatment process (preliminary desorption process) may be removed. In addition, in the process of secondary oxidation heat treatment at high temperature (desorption process), carbon-based foreign substances such as a binder, a conductive material, and a coating agent on the surface of a cathode active material may be removed. Accordingly, the residual amount of foreign substances other than the components constituting the cathode active material may be significantly reduced, thereby enabling recovery of a high-purity cathode active material through a simple process.

In addition, for example, the cathode active material within the waste cathode may be coated with a coating agent including a metal and/or carbon. In general, the cathode active material may be coated with various coating agents including a metal and/or carbon for the purpose of improving battery performance. During the process of recovering a cathode active material from a waste cathode, the structure of this coating layer is destroyed, and when the cathode active material is reused in a battery without removing the coating layer, deterioration of battery performance may be caused. Accordingly, when a cathode active material inside a waste cathode is coated, it is advantageous to remove the coating layer. In secondary heat treatment step (a2), the carbon coating on the surface of the cathode active material may be removed. In this case, the purity of the recovered cathode active material may be increased, and battery performance degradation may be prevented.

For example, the primary heat treatment and secondary heat treatment may be performed under an oxidizing atmosphere including an air atmosphere or an oxygen atmosphere. In this case, foreign metal substances introduced from the binder, conductive material, and current collector may be smoothly removed, so that the desired cathode active material may be recovered in high purity and high yield.

For example, the purity of the oxygen atmosphere may be 30 % or more or 50 % or more, preferably 70 % or more, more preferably 80 % or more, still more preferably 90 % or more, still more preferably 90 to 99 %. Within this range, the desired cathode active material may be recovered in high purity and high yield.

The purity (%) of oxygen may be expressed as volume% or mol%.

The purity of oxygen in the present invention may be measured without particular limitations using measurement methods commonly used in the technical field to which the present invention pertains.

The primary heat treatment may be performed at preferably 330 to 440 °C, more preferably 350 to 440 °C, still more preferably 360 to 440 °C, still more preferably 360 to 420 °C. Within this range, the purity and recovery yield of a cathode active material precursor may be significantly increased without excessive energy consumption.

For example, until the primary heat treatment temperature is reached, the heating rate may be 1 to 10 °C/min, preferably 2 to 9 °C/min, more preferably 3 to 7 °C/min. Within this range, the desired cathode active material may be recovered in high purity and high yield.

For example, the primary heat treatment time may be 30 minutes to 10 hours, preferably 40 minutes to 8.5 hours, more preferably 1 to 8 hours, still more preferably 3 to 6 hours. Within this range, the desired cathode active material may be recovered in high purity and high yield.

For example, in primary heat treatment step (a1), the active material layer of the waste cathode may be separated from the current collector. During this process, some of the binder and conductive material included in the cathode active material layer may be removed, but some of the binder and conductive material that is not removed may remain in the preliminary desorbed cathode material in primary heat treatment step (a1). Accordingly, the cathode material recovered in primary heat treatment step (a1) may include a cathode active material, a residual binder, and a residual conductive material.

In primary heat treatment step (a1), the preliminary desorbed cathode material may be recovered in powder form.

For example, the step of recovering a cathode active material may include a step of cooling the recovered cathode active material powder in the primary heat treatment step between primary heat treatment step (a1) and secondary heat treatment step (a2). In this case, by minimizing the mixing ratio of the metal constituting the current collector, the cathode active material precursor may be recovered in high purity and high yield. In addition, the crystallinity of the recycled cathode active material obtained after the recycling process may be increased. Thus, when the recycled cathode active material is used in a secondary battery, the battery characteristics may be improved.

As a specific example, the cooling may be natural cooling performed by stopping heat supply to a furnace where the primary heat treatment is performed and leaving the furnace at room temperature. In this case, the subsequent processes may be easily performed without additional energy consumption.

In the present disclosure, room temperature refers to a point within 20 ± 5 °C.

The secondary heat treatment may be performed at 500 to 650 °C, preferably 520 to 630 °C, more preferably 530 to 620 °C, still more preferably 520 to 610 °C. Within this range, the purity and recovery yield of a cathode active material precursor may be significantly increased without excessive energy consumption.

For example, until the secondary heat treatment temperature is reached, the heating rate may be 1 to 10 °C/min, preferably 5 to 10 °C/min, more preferably 7 to 9 °C/min. Within this range, the desired cathode active material may be recovered in high purity and high yield.

For example, the secondary heat treatment time may be 30 minutes to 10 hours, preferably 40 minutes to 8.5 hours, more preferably 1 to 8 hours, still more preferably 3 to 6 hours. Within this range, the desired cathode active material may be recovered in high purity and high yield.

For example, after the secondary heat treatment is completed, the recovered cathode active material may be naturally cooled. In this case, the recovered cathode active material may be easily introduced into the subsequent process.

For example, after step (a) of recovering a cathode active material is completed, the recovered cathode active material (cathode active material precursor) may include the compound represented by Chemical Formula 1, preferably an LFP-based cathode active material, as a specific example, Fe₂O₃ and Li₃Fe₂(PO₄)₃. In this case, the residual amount of metallic foreign substances such as aluminum and carbon-based foreign substances may be significantly reduced through subsequent recycling treatment, thereby providing a high-purity recycled cathode active material. The recycled cathode active material has high purity. Accordingly, when the recycled cathode active material is applied as the cathode active material of a secondary battery, excellent battery characteristics may be realized.

In the present disclosure, as the LFP-based cathode active material, any LFP-based cathode active material commonly defined or used in the technical field to which the present invention belongs may be used without any particular limitation.

For example, after step (a) of recovering a cathode active material is completed, in the recovered cathode active material precursor, the content of residual metals introduced from the current collector may be 390 ppm or less, preferably 250 ppm or less, more preferably 240 ppm or less, still more preferably 230 ppm or less, still more preferably 225 ppm or less, and the lower limit of the content is not particularly limited. In terms of the balance between the purity and recovery rate of a cathode active material and process efficiency, the content of residual metals may be 10 ppm or more, or 50 ppm or more. In this case, a high-purity cathode active material may be recovered.

The metal introduced from the current collector is not particularly limited as long as the metal is a metal commonly applied to current collectors in the technical field to which the present invention belongs, and as a specific example, may be aluminum.

In the present disclosure, as a method of measuring the content of a metal element, a method commonly practiced in the technical field to which the present invention belongs may be used without particular limitation, and as a specific example, the content of a metal element may be measured by ICP (Inductively Coupled Plasma) analysis.

For example, after step (a) of recovering a cathode active material is completed, the recovered cathode active material precursor may have a carbon element (C) content of 1.0 % by weight or less, preferably 0.5 % by weight or less, more preferably 0.1 % by weight or less, still more preferably 0.08 % by weight or less, still more preferably 0.06 % by weight or less, and the lower limit thereof is not particularly limited. In terms of the balance between the purity and recovery rate of a cathode active material and process efficiency, the carbon element (C) content may be 0.001 % by weight or more, or 0.01 % by weight or more. In this case, a high-purity cathode active material may be recovered.

In the present disclosure, as the method of measuring the content of a carbon element, a method of measuring the content of a carbon element commonly practiced in the technical field to which the present invention belongs may be used without particular limitation, and as a specific example, the content of a carbon element may be measured by quantitative analysis using a carbon/sulfur (CS) determinator.

### (b) Recovering a trivalent iron compound-free divalent structure in the cathode active material

In the present invention, the method of recycling a cathode active material includes step (b) of adding a coating agent to the recovered cathode active material and performing calcination under a reducing atmosphere to form a coating layer on the surface of the cathode active material, convert a trivalent iron compound in the cathode active material into a divalent iron compound, and convert polycrystalline particles into a single crystal cathode active material. In this case, a coating layer may be formed on the particle surface of the recycled cathode active material. Thus, when the recycled cathode active material is applied to a secondary battery, the output characteristics, charging and discharging performance, and lifespan performance of the battery may be improved, and battery characteristics equivalent to those when a fresh cathode active material is applied may be provided. In addition, since the trivalent iron compound-free divalent structure is restored similar to the crystal structure of a fresh cathode active material before forming the coating layer, the coating layer may be uniformly formed on the particle surface, particle agglomeration of the cathode active material may be prevented, and battery performance may be improved.

Step (b) may include a step of adding a coating agent to the recovered cathode active material (precursor) and performing preliminary milling; a step of spray-drying the preliminary-milled cathode active material; and a step of calcining the spray-dried cathode active material at 710 to 900 °C under a reducing atmosphere. In this case, a coating layer having a uniform particle size and uniform thickness may be formed. In addition, since a divalent iron compound is contained in the cathode active material without a trivalent iron compound, a structure similar to the crystal structure of a fresh cathode active material may be recovered.

For example, the coating agent may be a coating agent including one or more of a metal, an organic metal, and a carbon component, preferably a coating agent including a carbon component configured to form a carbon coating. In this case, battery characteristics may be further improved.

As the carbon component, a carbon component commonly used in the technical field to which the present invention belongs may be used without any particular limitation. As a specific example, the carbon component may include one or more selected from the group consisting of sugars, such as sucrose, glucose, and fructose, graphite, and polyvinylidene fluoride, preferably sugars, more preferably sucrose. In this case, coating may be easily performed, and economic efficiency may be improved. In addition, when applied to a battery, battery characteristics may be significantly improved.

The coating agent including a metal may be preferably a coating agent including one or more selected from the group consisting of B, W, Al, Ti, Mg, Ni, Co, Mn, Si, Zr, Ge, Sn, Cr, Fe, V, Nb, and Y, more preferably a coating agent including one or more selected from the group consisting of B, W, Al, Ti, and Mg, still more preferably a coating agent including boron (B), tungsten (W), or a mixture thereof, still more preferably a coating agent including tungsten (W) and boron (B), as a specific example, a coating agent including tungsten boride (WB). In this case, resistance characteristics and lifespan characteristics may be improved.

For example, the metal may be an oxide or an acid including the metal as an element in the molecule thereof.

As the coating agent including an organic metal, coating agents including an organic metal commonly used in the art to which the present invention pertains may be used without particular limitation. As a specific example, metal alkoxides may be used.

For example, as the coating agent, a coating agent solution obtained by mixing a metal, an organic metal, or a carbon component with an appropriate solvent may be used. At this time, any solvent commonly used may be used as the solvent without any particular limitation. As a specific example, an aqueous solvent, more specifically, deionized water may be used as the solvent. Based on a total weight of the coating agent solution, the solid content in the coating agent solution may be 20 % by weight or less, preferably 1 to 15 % by weight, more preferably 2 to 10 % by weight. In this case, the coating efficiency may be excellent, and the subsequent milling process may proceed smoothly. Accordingly, the coating layer ultimately formed on the particle surface of the cathode active material may be uniform.

As the method of applying the coating agent to the recovered cathode active material (precursor), coating methods commonly used in the art to which the present invention pertains may be used without particular limitation. As a specific example, a liquid method of mixing a cathode active material and a liquid coating agent, a mechanochemical method using the high mechanical energy of ball milling, a fluid bed coating method, a spray drying method, a precipitation method of precipitating a coating agent onto the surface of a cathode active material in an aqueous solution, a method using reaction between a vapor phase coating agent and a cathode active material, or sputtering may be used.

The method of drying the coating agent-coated cathode active material may be preferably a spray drying method. In this case, the coating may be formed uniformly, agglomeration of cathode active material particles may be prevented, and the coating process may be performed smoothly, resulting in excellent productivity.

The spray drying may be performed without any particular limitations using spray drying equipment commonly used in the technical field to which the present invention belongs. For example, an ultrasonic spray drying device, an air nozzle spray drying device, an ultrasonic nozzle spray drying device, a filter expansion droplet generating device, or an electrostatic spray drying device may be used. As a specific example, PSD-05 (manufactured by Eugene Tech Co., Ltd.) equipment may be used, but the present invention is not limited thereto.

In addition, spraying pressure, the supply speed of a coating agent solution, and the like may be appropriately selected considering the amount of the coating agent to be coated on the surface of the recycled cathode active material.

After the spray drying, calcination of the coating agent-coated cathode active material may be performed at a temperature of 710 to 900 °C, preferably 710 to 850 °C, more preferably 710 to 800 °C, still more preferably 710 to 750 °C under a reducing atmosphere. In this case, the coating agent may be stably coated on the surface of the cathode active material while maintaining the inherent properties of the cathode active material. From Examples 1 and 2 described below, it can be confirmed that the calcination process atmosphere and the temperature conditions thereof are variables that may restore the trivalent iron compound-free 2-valent structure and recover the active material in a single crystal state.

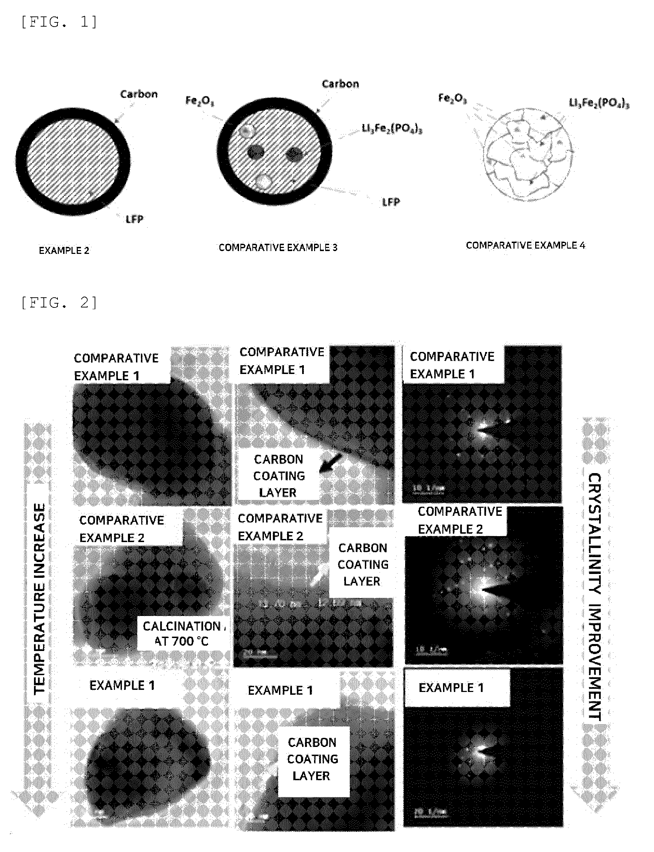

The interior of the recycled cathode active material according to the present invention and the interior of the recycled cathode active material not according to the present invention are schematically shown in FIG. 1 below.

FIG. 1 below is a schematic diagram showing the cathode active material recycled in Example 2 according to the present invention and the cathode active material recycled in Comparative Examples 3 and 4 not according to the present invention. As shown in Comparative Example 4 on the right side of FIG. 1, when heat treatment is performed under an oxidizing atmosphere and then calcination treatment is not performed under a reducing atmosphere, a trivalent iron compound exists inside. In addition, in Comparative Example 3 in the middle of FIG. 1, where the calcination temperature conditions are unsuitable even when calcined under a reducing atmosphere, some trivalent iron compounds remain that are not converted to divalent iron compounds. On the other hand, in Example 2 on the left side of FIG. 1, where both the heat treatment conditions and the calcination temperature conditions are according to the present invention, it is confirmed that all trivalent iron compounds are converted to divalent iron compounds.

For example, when performing the calcination, until the calcination temperature is reached, the heating rate may be 1 to 20 °C/min, preferably 1 to 10 °C/min, more preferably 2 to 7 °C/min. Within this range, the desired calcination effect may be sufficiently achieved.

For example, the calcination may be performed at the calcination temperature for 1 to 24 hours, preferably 1 to 16 hours, more preferably 3 to 16 hours. Within this range, the desired calcination effect may be sufficiently achieved.

For example, the reducing atmosphere may be an argon (Ar) or nitrogen (N₂) atmosphere. As a preferred example, in the reducing atmosphere, the purity of nitrogen may be 80 % or more, preferably 90 % or more, more preferably 90 to 99.8 %, still more preferably 95 to 99.8 %. In this case, during the calcination process, oxidation of the coating agent may be prevented, and a coating layer may be stably formed on the surface of the cathode active material.

The purity (%) of nitrogen may be volume% or mol%.

In this description, the purity of nitrogen may be measured without any particular limitation by a measurement method commonly used in the technical field to which the present invention belongs.

For example, based on a total weight of the recycled cathode active material including the weight of the coating layer, the amount of the coating layer formed on the surface of the recycled cathode active material particles may be 0.1 to 15 % by weight, preferably 0.2 to 10 % by weight, more preferably 0.5 to 5 % by weight, still more preferably 0.7 to 3 % by weight, still more preferably 0.8 to 2 % by weight. Within this range, the desired coating effect may be sufficiently achieved.

The amount of the coating layer formed on the surface of the recycled cathode active material particles may be measured using a measurement method commonly used in the technical field to which the present invention belongs, and as a specific example, may be measured quantitatively by thermogravimetric analysis (TGA) or a carbon/sulfur (CS) determinator.

The thickness of the coating layer coated on the surface of the recycled cathode active material particles may be appropriately controlled depending on the desired coating amount. In the present disclosure, the thickness of the coating layer may be measured by a measurement method commonly practiced in the technical field to which the present invention belongs. For example, the thickness of the coating layer may be obtained by measuring the long-side diameters of 5 to 100 cathode active material particles using a transmission electron microscope (TEM) or a scanning electron microscope (SEM), and then calculating the arithmetic mean of the measured values.

Step (b) may include a preliminary milling step. In this case, by controlling the particle size within a predetermined range before subjecting the recovered cathode active material into a subsequent recycling process, the particle diameter and particle size distribution of the ultimately obtained recycled cathode active material may be evenly controlled. In addition, by controlling the particles in a state favorable for the recovery of the crystal structure of the cathode active material in the subsequent step, the battery characteristics may be significantly improved.

For example, the preliminary milling may be performed using a ball mill, a high-energy ball mill, a vibrating mill, or a roll-mill, preferably a ball mill. In this case, the particle size distribution of the recycled cathode active material may be easily controlled, and the average particle diameter of the finally obtained recycled cathode active material may be easily controlled, which may be advantageous for the recovery of the crystal structure of the cathode active material in a subsequent step.

For example, the preliminary milling may be performed for 2 hours to 24 hours, preferably 2 hours to 20 hours, more preferably 5 hours to 16 hours. Within this range, the occurrence of fine particles may be suppressed, and the particle size distribution of the recycled cathode active material may be smoothly controlled within a narrow range.

For example, the preliminary milling may be performed at 50 to 500 rpm, preferably 100 to 450 rpm, more preferably 150 to 420 rpm, still more preferably 180 to 410 rpm, still more preferably 200 to 400 rpm, still more preferably 250 to 320 rpm. In this case, the occurrence of fine particles may be suppressed, and the desired effect may be sufficiently achieved while maintaining the crystal structure of the cathode active material.

After the preliminary milling, the obtained cathode active material powder may have an average particle diameter (D₅₀) of 0.3 to 0.7 µm, preferably 0.3 to 0.65 µm, more preferably 0.35 to 0.65 µm, still more preferably 0.4 to 0.6 µm, still more preferably 0.45 to 0.55 µm. In this case, occurrence of fine particles may be suppressed, and the particle size of the finally obtained recycled cathode active material may be controlled within the desired range while maintaining the crystal structure of the cathode active material.

### (c) Synthesizing single crystal particles

For example, the method of recycling a cathode active material of the present invention may include step (c) of milling the cathode active material in which a trivalent iron compound-free divalent structure is recovered. In this case, agglomeration and particle breakage of the finally obtained recycled cathode active material may be prevented, and the generation of fine particles may be prevented. In addition, since the particle size distribution is controlled within a narrow range, the cathode active material may be prepared as a single crystal particle. Accordingly, battery performance degradation due to fine particles may be prevented, and the thermal stability and lifespan characteristics of a battery may be further improved. In addition, ultimately, when the recycled cathode active material is used as a cathode of a secondary battery, battery characteristics equivalent to or superior to those of a fresh cathode active material may be provided.

For example, the single particle may be a particle composed of 30 or fewer nodules, preferably a particle composed of 1 to 20 nodules, more preferably a particle composed of 1 to 10 nodules, still more preferably a particle composed of 1 to 5 nodules, most preferably a particle composed of 1 nodule. In this case, a cathode material that prevents battery performance degradation during an electrode manufacturing process and imparts high thermal stability and excellent lifespan characteristics to a battery may be provided.

In the present disclosure, a nodule refers to a particle unit body that constitutes a single particle, and may be a single crystal lacking a crystalline grain boundary, or a polycrystal in which no grain boundary exists in appearance when observed under a field of view of 5,000 to 20,000 times using a scanning electron microscope (SEM) or electron backscatter diffraction (EBSD).

In the present disclosure, the number of nodules refers to the average number of nodules of cathode active material particles. A cathode containing a cathode active material is cut using the ion milling method, and a cross-sectional image in the thickness direction of the cut cathode is obtained using a scanning electron microscope (SEM). Then, within the cross-sectional image, at least 30 particles are selected for each of large-diameter cathode active material particles and small-diameter cathode active material particles. Then, the number of nodules in the cross-section of each cathode active material particle is measured through SEM image analysis, and the arithmetic mean is calculated.

In the present disclosure, a secondary particle is an aggregate formed by the agglomeration of multiple single particles and refers to a particle containing more than 30 nodules.

For example, in step (c), the milling may be performed using a jet mill. In this case, the particle size and particle distribution of the finally obtained recycled cathode active material may be precisely controlled within a narrow range while preventing damage to the crystal structure of the cathode active material. In addition, since the inflow of foreign substances that may occur during the milling process is prevented, the purity of the recycled cathode active material may be increased.

For example, the jet mill may be operated at a temperature of -30 °C to 30 °C, preferably -20 °C to 20 °C, and a pressure of 0.8 to 10 bar under an air or inert gas. In this case, the particle size and particle distribution of the finally obtained recycled cathode active material may be precisely controlled within a narrow range while preventing damage to the crystal structure of the cathode active material. In addition, since the inflow of foreign substances that may occur during the milling process is prevented, the purity of the recycled cathode active material may be increased.

In particular, it is preferable to perform jet milling using an inert gas that does not react with the recycled cathode active material, as this may prevent the trivalent iron compound from being regenerated by jet milling energy. For example, the inert gas may be argon (Ar), nitrogen (N₂), or the like.

More specifically, the jet milling may be performed for 5 minutes or less under the conditions of a pressure of a feeding line of 2 to 8 bar, preferably 2.5 to 6 bar, more preferably 3 to 5 bar and a pressure of a grinding line of 0.8 to 2 bar, preferably 0.9 to 1.5 bar, more preferably 1 to 1.3 bar. Within this range, damage to the crystal structure of the cathode active material may be prevented, the particle size and particle distribution of the finally obtained recycled cathode active material may be precisely controlled within a narrow range, and a single particle structure may be easily implemented.

For example, in step (c), the average particle diameter (D₅₀) of the finally recovered recycled cathode active material may be 0.6 to 3.0 µm, preferably 0.7 to 2.0 µm, more preferably 0.8 to 1.5 µm, still more preferably 0.9 to 1.2 µm, still more preferably 0.955 to 1.255 um. In this case, excellent battery characteristics may be achieved.

In the present disclosure, as the method of measuring the average particle diameter (D₅₀) of the cathode active material, a measurement method commonly used in the technical field to which the present invention belongs may be used without particular limitation. For example, the average particle diameter may be an average particle diameter based on a cumulative 50 % standard in a particle diameter distribution measured using a laser diffraction method.

For example, in step (c), the recovered recycled cathode active material may have a crystal size of 120 to 180 nm, preferably 125 to 170 nm, more preferably 130 to 167 nm, still more preferably 140 to 166 nm, still more preferably 150 to 165 nm as measured by X-ray diffraction (XRD). In this case, the structure of the recycled cathode active material may be restored to that of a fresh cathode active material, thereby providing excellent battery characteristics.

In addition, for example, in step (c), the finally recovered recycled cathode active material may have a cell volume of 291.00 to 291.12 Å³, preferably 291.02 to 291.12 Å³, more preferably 291.15 to 291.11 Å³ as measured by XRD. In this case, the structure of the recycled cathode active material may be restored to that of a fresh cathode active material, thereby providing excellent battery characteristics.

### Recycled cathode active material

The recycled cathode active material of the present invention is prepared using the method of recycling a cathode active material of the present invention. In this case, environmental friendliness may be achieved, and a single crystal structure may be obtained. In addition, by converting trivalent irons to divalent irons, no trivalent iron compound remains inside the recycled cathode active material. Accordingly, when the recycled cathode active material is used as a cathode active material of a secondary battery, the charging and discharging characteristics, cycle characteristics, lifespan characteristics, and thermal stability of the battery may be excellent, and the high-temperature performance of the battery may be improved. In addition, ultimately, the recycled cathode active material of the present invention may provide battery characteristics equivalent to or superior to those of a secondary battery using a fresh cathode active material.

For example, the recycled cathode active material may be a compound represented by Chemical Formula 1, preferably a lithium iron phosphate (LFP)-based cathode active material, more preferably LiFePO₄ having an olivine structure. In this case, high-temperature stability, lifespan characteristics, and economy may be excellent.

[Chemical Formula 1] Li₁₋ₐMₐFe_{1-b}N_{b}P_{1-c}X_{c}O_{4-d}Y_{d}

In Chemical Formula 1, M includes one or more elements selected from the group consisting of Nb, Al, Na, Ti, Zr, and K; N includes one or more elements selected from the group consisting of Mo, V, Mn, Sm, Eu, Yb, Cu, Mg, Ni, and Co; X includes Si; Y includes one or more elements selected from the group consisting of F, S, and N; and a, b, c, d are 0≤a<1, 0≤b<1, 0≤c<1, 0≤d<4, respectively.

In Chemical Formula 1, a, b, c, d are preferably 0≤a≤0.5, 0≤b≤0.5, 0≤c≤0.5, 0≤d≤0.1, respectively.

For example, the recycled cathode active material may have a crystal size of 120 to 180 nm and a cell volume of 291.00 to 291.12 Å³ as measured by XRD. Preferably, the crystal size thereof may be 125 to 170 nm, more preferably 130 to 167 nm, still more preferably 140 to 166 nm, still more preferably 150 to 165 nm. Preferably, the cell volume thereof may be 291.02 to 291.12 Å³, more preferably 291.15 to 291.11 Å³. In this case, excellent battery characteristics may be provided.

The recycled cathode active material may preferably be a single particle in which no boundary layer is observed within the particle, more preferably a single particle formed of only a single crystal, and does not include secondary particles. In this case, during the electrode manufacturing process, the cathode active material is converted into one containing only divalent iron compounds. Thus, deterioration of battery performance may be prevented, lifespan characteristics may be excellent in a high-voltage environment, thermal stability may be increased, and the amount of gas generated during charging and discharging may be reduced.

For example, the recycled cathode active material may be a cathode active material composed of 99 mol% or more or 100 mol% of a single crystal, preferably the compound represented by Chemical Formula 1, more preferably a lithium iron phosphate compound. In this case, by synthesizing single crystal particles during the cathode active material recycling process, deterioration of battery performance may be prevented, lifespan characteristics may be excellent in a high-voltage environment, thermal stability may be increased, and the amount of gas generated during charging and discharging may be reduced.

Based on 100 mol% in total of the divalent and trivalent iron compounds, the recycled cathode active material may include a trivalent iron compound in an amount of less than 1 mol% or 0 mol%, more preferably 0 mol% as measured by XRD analysis or electron paramagnetic resonance (EPR) analysis. In this case, by synthesizing cathode active material particles containing only divalent iron compounds during the electrode manufacturing process, deterioration of battery performance may be prevented, lifespan characteristics may be excellent in a high-voltage environment, thermal stability may be increased, and the amount of gas generated during charging and discharging may be reduced.

In the present invention, mol% may be referred to as volume% when necessary.

For example, the recycled cathode active material may have a fluorine (F) content of 250 mg/kg or less, preferably 200 mg/kg or less, more preferably 10 to 200 mg/kg. Within this range, particle strength may be improved, and thus, charge capacity, resistance characteristics, and capacity characteristics may be excellent.

In the present disclosure, the fluorine (F) content may be measured using an ICP analyzer. At this time, a general ICP analyzer widely used in laboratories may be used, but there is no deviation depending on the measuring device or method.

For example, the recycled cathode active material may have an average crystal size of 50 to 500 nm, preferably 50 to 300 nm, more preferably 50 to 200 nm. Within this range, the conductivity of a recycled cathode active material may be improved, thereby increasing the battery lifespan.

In the present disclosure, the average crystal size may be measured by XRD crystal analysis and there is no deviation depending on the measuring device or method. Specifically, 5 g of cathode active material particles are placed in a holder, the particles are irradiated with X-rays, and the resulting diffraction grating is analyzed to obtain the average crystal size. At this time, according to the calculation method, the average crystal size of the primary particles of the cathode active material particles may be obtained from the half-width of the main peak or three or more peaks.

In addition, the recycled cathode active material of the present invention includes a lithium iron phosphate compound coated with a coating agent containing carbon, and is characterized in that no peak of a trivalent iron compound appears in XRD analysis and electron paramagnetic resonance (EPR) analysis. In this case, battery performance such as charge capacity, resistance characteristics, and capacity characteristics may be excellent.

### Secondary battery

The secondary battery of the present invention includes the recycled cathode active material. In this case, by completely converting a trivalent iron compound inside the recycled cathode active material into a divalent iron compound and achieving a single crystal structure, deterioration of battery performance may be prevented, lifespan characteristics may be excellent in a high-voltage environment, thermal stability may be increased, and the amount of gas generated during charging and discharging may be reduced.

Description of the secondary battery of the present invention may include all of the description of the recycled cathode active material and the method of recycling a cathode active material described above, and thus repeated description is omitted in this specification.

The method of manufacturing a secondary battery according to the present invention is not particularly limited as long as the method is a method of manufacturing a lithium secondary battery commonly used in the technical field to which the present invention belongs.

Hereinafter, the present invention will be described in more detail with reference to the following preferred examples. However, these examples are provided for illustrative purposes only and should not be construed as limiting the scope and spirit of the present invention. In addition, it will be apparent to those skilled in the art that various changes and modifications may be made without departing from the spirit and scope of the present invention, and such changes and modifications are also within the scope of the appended claims.

### [Examples]

### Example 1

On an aluminum current collector, as a waste cathode material to which a cathode active material layer including an LFP cathode active material having an olivine structure, a binder, and a conductive material was applied, cathode scraps remaining after punching out a cathode plate were prepared. Then, the cathode scraps were crushed into a size of 2 cm × 2 cm.

Then, the temperature was increased at a heating rate of 5 °C/min under an oxygen atmosphere, and then primary heat treatment was performed by heating at 390 °C for 5 hours. At this time, 95 % purity oxygen gas was supplied at 3 L/min. During this process, a binder inside the waste cathode was thermally decomposed, and cathode active material powder separated from the current collector was recovered.

After the primary heat treatment, heat supply was stopped, and the recovered cathode active material powder was completely cooled in room temperature. The temperature was then increased again at a heating rate of 8 °C/min under an air atmosphere, and then the recovered cathode active material powder was heated at 580 °C for 5 hours to perform secondary heat treatment. At this time, oxygen gas was supplied at a rate of 3 L/min.

After the secondary heat treatment, heat supply was stopped, and cooling was performed in room temperature. Then, as a coating agent, a coating agent composition (solvent: water) obtained by mixing sucrose in deionized water so that the carbon content was 4.4 parts by weight based on 100 parts by weight of the cathode active material was added to the recovered cathode active material (precursor) powder, preliminary milling was performed at 300 rpm for 12 hours using a ball mill, and then the coating agent-coated cathode active material was dried by spray drying. The average particle diameter (D₅₀) of the spray-dried cathode active material powder was 0.5 µm.

In a furnace, the spray-dried cathode active material was heated at a heating rate of 3 °C/min under a nitrogen atmosphere, and then calcination was performed at 800 °C for 12 hours to form a carbon (C) coating layer on the surface of the cathode active material. At this time, the nitrogen supply rate during the calcination was 3 L/min, and the coating amount according to CS analysis results after the calcination was completed was 1.43 % by weight.

The coated cathode active material was milled using a jet mill at a feeding line pressure of 4 bar and a grinding line pressure of 1 bar under an air atmosphere to obtain a recycled cathode active material having a final particle size of 200 to 1500 nm.

### Example 2

A recycled cathode active material was prepared in the same manner as in Example 1, except that milling was performed under a feeding line pressure of 4 bar and a grinding line pressure of 1 bar using a jet mill under an inert argon (Ar) atmosphere.

### Comparative Example 1

Instead of a recycled cathode active material, a fresh LFP cathode active material was used. As a result of analyzing the fresh LFP cathode active material by ICP analysis, it was confirmed that the fresh LFP cathode active material was an LFP(LiFePO₄) cathode active material having an elemental ratio of Li/Fe : 1.06, Li/P : 1.00, P/Fe : 1.06.

### Comparative Example 2

A recycled cathode active material was prepared in the same manner as in Example 1, except that, after the spray drying, calcination was performed at 700 °C.

### Comparative Example 3

A recycled cathode active material was prepared in the same manner as in Example 2, except that after the spray drying, calcination was performed at 600 °C.

### Comparative Example 4

In Example 2, only the secondary heat treatment step was performed to prepare a recycled cathode active material.

### [Test Example I: TEM analysis]

TEM analysis was performed on the recycled or fresh cathode active materials obtained in Examples 1 and 2 and Comparative Examples 1 to 4.

Specifically, scanning electron microscope images of the cathode active materials were obtained using a scanning electron microscope (TITAN G2 800-200), and the images are shown in FIGS. 1 and 2 below.

FIG. 1 shows TEM images of the recycled or fresh cathode active materials obtained in Example 1 according to the present invention and Comparative Examples 1.

As shown in FIG. 1 below, Example 1 and Comparative Example 2 appear similar when looking at the carbon coating layer and the interface thereof. However, in the electron diffraction pattern (EDP) drawing on the right, when a spot structure (corresponding to a single particle crystal structure) and a ring structure (corresponding to a multi-particle crystal structure) are observed, in Comparative Example 2, the ring structure, which is a single particle crystal structure, and the spot structure, which is a multi-particle crystal structure, are clearly observed simultaneously, indicating that single crystals and polycrystals coexist. In the case of Example 1, only the spot structure, which is a single particle crystal structure, is observed, indicating that a particle consisting of only a single crystal is manufactured.

Based on these results, it was confirmed that a recycled cathode active material of a single particle was synthesized in a single crystal structure according to the recycling process of the present invention.

### [Test Example II: TEM analysis]

TEM analysis was performed on the recycled or fresh cathode active materials obtained in Examples 1 and 2 and Comparative Examples 1 to 4.

Specifically, TEM images of the cathode active materials were obtained using TEM (TITAN G2 800-20) equipment.

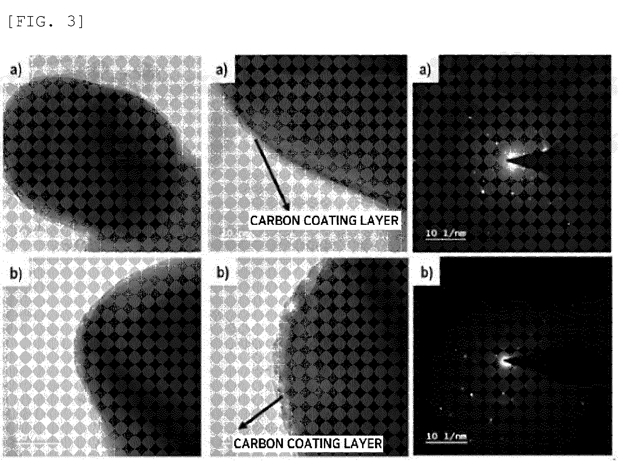

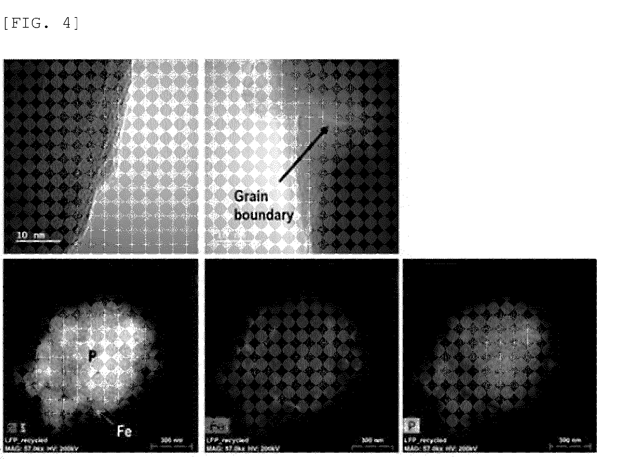

FIG. 3 below shows TEM images and electron diffraction pattern (EDP) images of the cathode active material recycled in Example 2 according to the present invention and the cathode active material recycled in Comparative Example 3, and FIG. 4 below shows a TEM image and a TEM-EDS mapping image of the cathode active material recycled in Comparative Example 4.

As shown in FIG. 3 below, in Example 2 and Comparative Example 3, the reduction reaction of Fe³⁺ occurs appropriately and no grain boundary is observed. On the other hand, in Comparative Example 4 of FIG. 4, it can be confirmed that a grain boundary is observed because trivalent iron compounds (Fe₂O₃ and Li₃Fe₂(PO₄)₃) exist within the particles in the recycled cathode active material.

Here, the similarity between the images of Example 2 and Comparative Example 3 is inferred to be due to the fact that localized foreign substances (trivalent iron compounds) that are difficult to observe in TEM images remain in Comparative Example 3.

In the TEM-EDS mapping image of Comparative Example 4 in FIG. 4 below, it is observed that P element exists in large quantities on the inside and Fe exists in large quantities on the particle surface. Here, P indicates the presence of trivalent iron compound Li₃Fe₂ (PO₄) ₃, and Fe at the surface site is inferred to be Fe₂O₃.

Accordingly, in Comparative Example 4, since the reduction calcination process is not performed, most of the trivalent iron compounds exist as Fe oxide compounds, and a core/shell form is observed. According to the TEM-EDS mapping in FIG. 3, both Example 2 and Comparative Example 3 show a mixed shape of P and Fe, which is inferred to be because most of the trivalent iron compounds (Li₃Fe₂ (PO₄) ₃ and Fe₂O₃) were reduced to the divalent iron compound LFP form.

### [Test Example III: XRD analysis]

XRD analysis was performed on the recycled or fresh cathode active materials obtained in Examples 1 and 2 and Comparative Examples 1 to 4, and XRD graphs were obtained.

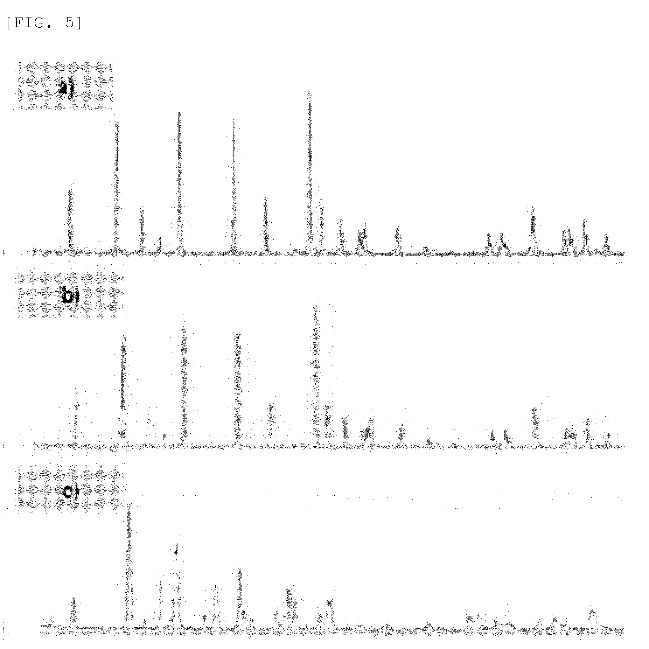

Specifically, FIG. 5 below shows XRD graphs of the recycled cathode active materials of Example 2 according to the present invention and Comparative Examples 3 and 4.

As shown in FIG. 5 below, in the case of Example 2 according to the present invention and Comparative Examples 3 and 4, the reduction reaction of a trivalent iron compound to a divalent iron compound proceeded appropriately, and an XRD graph matching the fresh LFP was obtained.

On the other hand, in the case of Comparative Example 4, it was confirmed that the reduction reaction of the trivalent iron compound to the divalent iron compound did not occur well, so Fe₂O₃ and Li₃Fe₂ (PO₄) ₃ were observed.

### [Test Example IV: XPS analysis]

XPS analysis was performed on the recycled or fresh cathode active materials obtained in Examples 1 and 2 and Comparative Examples 1 to 4, and XPS graphs were obtained.

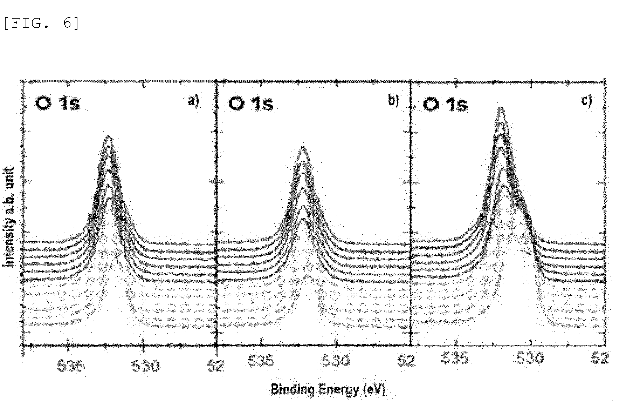

Specifically, FIG. 6 below shows XPS graphs of the recycled cathode active materials of Example 2 according to the present invention and Comparative Examples 3 and 4. Difference in O₁ₛ was analyzed by XPS analysis.

As shown in FIG. 6 below, no differences could be found between the graphs of reference (fresh LFP) and Comparative Example 3, which was presumed to be because the oxygen element present in the cathode active material is located within the same crystal.

However, a shoulder is observed near 530 eV in Comparative Example 4. This is believed to be because, as shown in the EDP image of FIG. 3, in Comparative Example 4, the particle exterior is in the form of Fe₂O₃ and the interior of the particle has a core/shell form with many Li₃Fe₂ (PO₄) ₃ present.

As with the XRD in FIG. 5, when a trace amount of trivalent iron compound exists in the fresh cathode active material of Comparative Example 1, it will not be observed by XPS, so the XPS analysis results of Example 2 and Comparative Example 3 are similar.

### [Test Example V: EPR analysis]

EPR analysis was performed on the recycled or fresh cathode active materials obtained in Examples 1 and 2 and Comparative Examples 1 to 4, and EPR graphs were obtained.

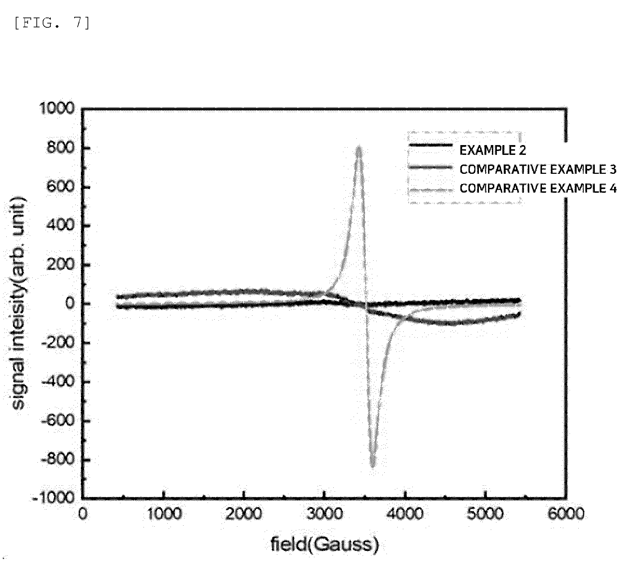

Specifically, FIG. 7 below shows EPR graphs of the recycled cathode active materials of Example 2 according to the present invention and Comparative Examples 3 and 4.

As shown in FIG. 7 below, in Comparative Example 4, peaks due to tertiary iron compounds present in Li₃Fe₂ (PO₄) ₃ and Fe₂O₃ were clearly observed.

However, in Example 2, the corresponding peak was not observed because all trivalent iron compounds were reduced and converted to divalent iron compounds.

In addition, unlike the XRD and XPS results, according to the EPR analysis, in Comparative Example 3, a graph showing a different slope shape from Example 2 was observed, which is believed that this is because a trace amount of trivalent iron compound that was not observed in XRD and XPS remained in Comparative Example 3, resulting in a slope-shaped graph of EPR.

Based on these results, unlike Comparative Examples 3 and 4, in Example 2, it was confirmed that the trivalent iron compound was completely converted and a recycled cathode active material containing only the divalent iron compound was prepared.

### [Test Example VI: CHC cell evaluation]

The electrochemical performance of the recycled or fresh cathode active materials obtained from Examples 1 and 2 and Comparative Examples 1 to 4 was measured through CHC cell evaluation as described below.
* CHC cell evaluation: 97.5 % by weight of the recycled or fresh cathode active material, 1 % by weight of carbon black as a conductive material, and 1.5 % by weight of PVdF as a binder were prepared and mixed with LFP to obtain slurry. Then, aluminum foil was coated with the slurry to manufacture a cathode, and then a cell (coin half cell, CHC) was manufactured. Then, voltage was set to 3 to 4.3 V, charging and discharging was performed at 0.1C/0.1C, and electrochemical performance (charge capacity, discharge capacity and efficiency) was evaluated under the condition including ethylene carbonate (EC), ethyl methyl carbonate (EMC) in a weight ratio of 3:7 and other additives as an electrolyte solution.

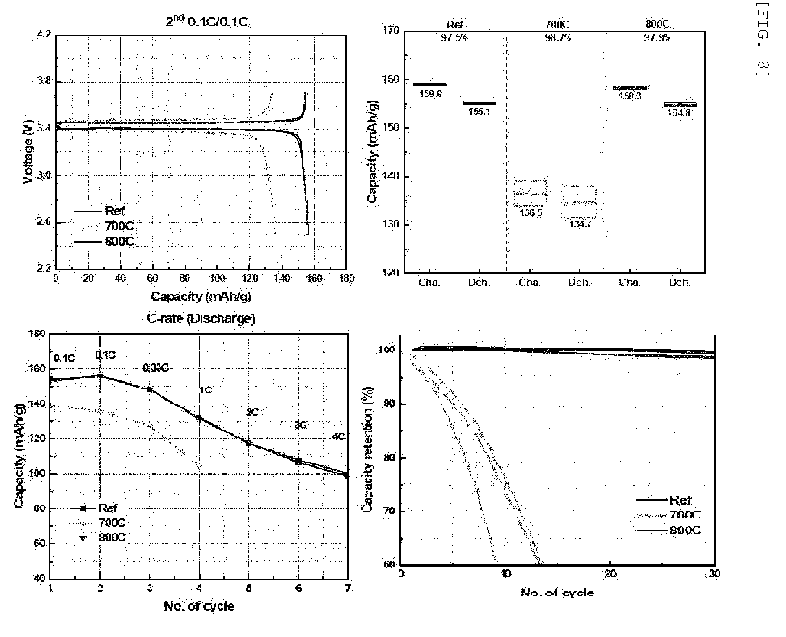

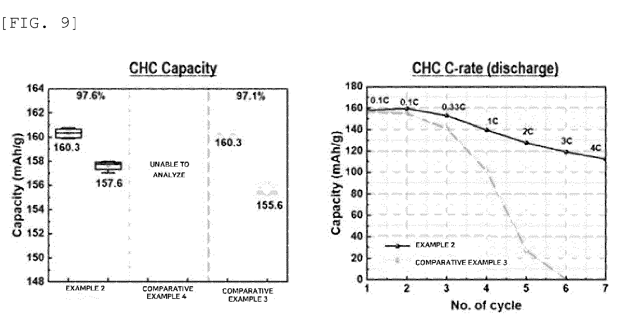

The results of the evaluation are shown in FIGS. 8 and 9, respectively.

FIG. 8 below is a diagram comparing the electrochemical performance, such as rated voltage, energy capacity, CHC capacity retention rate, and 45 °C lifespan capacity, of the recycled or fresh cathode active materials obtained in Example 1 and Comparative Examples 1 and 2. FIG. 9 below is a diagram comparing the electrochemical performance, such as energy capacity and CHC capacity retention rate, of the recycled or fresh cathode active materials obtained in Example 2 and Comparative Examples 3 and 4.

As shown in the upper right drawing of FIG. 8 below, Example 1 marked with blue ink exhibited charging and discharging capacity superior or equal to that of the fresh cathode active material of Comparative Example 1 marked with black ink and the recycled cathode active material of Comparative Example 2 marked with red ink.

As shown in FIG. 9 below, compared to Comparative Example 3 marked with black ink, Example 2 marked with blue ink showed excellent cell characteristics. In particular, as shown in the lower right drawing of FIG. 9, Example 2 exhibited excellent high-temperature (45 °C) lifespan characteristics. In contrast, in case of Comparative Example 4, the high-temperature (45 °C) lifespan characteristics were so poor that it was difficult to measure cell properties.

## Claims

1. A method of recycling a cathode active material, comprising:
(a) recovering a cathode active material by heat-treating a waste cathode comprising a current collector and a cathode active material layer formed on a surface thereof under an oxidizing atmosphere;
(b) adding a coating agent to the recovered cathode active material and performing calcination under a reducing atmosphere to form a coating layer on a surface of the cathode active material, convert a trivalent iron compound in the cathode active material into a divalent iron compound, and convert polycrystalline particles into a single crystal cathode active material; and
(c) controlling a particle size of the cathode active material by milling the cathode active material having the coating layer formed thereon, in which the trivalent iron compound is converted into the divalent iron compound.

2. The method according to claim 1, wherein step (a) comprises performing primary heat treatment at 300 to 440 °C under an oxidizing atmosphere; and performing secondary heat treatment at 500 to 650 °C under an oxidizing atmosphere after the primary heat treatment.

3. The method according to claim 1, wherein, in step (a), the primary heat treatment is performed for 30 minutes to 10 hours, and the secondary heat treatment is performed for 30 minutes to 10 hours.

4. The method according to claim 1, wherein step (b) comprises adding a coating agent to the recovered cathode active material and performing preliminary milling; spray-drying the preliminary-milled cathode active material; and calcining the spray-dried cathode active material at 710 to 900 °C under a reducing atmosphere.

5. The method according to claim 1 or 4, wherein the coating agent comprises one or more of a metal, an organic metal, and a carbon component.

6. The method according to claim 1 or 4, wherein, in step (b), calcination is performed for 1 to 24 hours.

7. The method according to claim 4, wherein the preliminary milling is performed using a ball mill, a high-energy ball mill, a vibrating mill, or a roll-mill.

8. The method according to claim 7, wherein the preliminary milling is performed at a stirring speed of 50 to 500 rpm for 2 to 24 hours.

9. The method according to claim 1, wherein, in step (c), the milling is performed using a jet mill.

10. The method according to claim 1, wherein the cathode active material is represented by Chemical Formula 1 below.
[Chemical Formula 1] Li₁₋ₐMₐFe_{1-b}N_{b}P_{1-c}X_{c}O_{4-d}Y_{d},
wherein M comprises one or more elements selected from the group consisting of Nb, Al, Na, Ti, Zr, and K; N comprises one or more elements selected from the group consisting of Mo, V, Mn, Sm, Eu, Yb, Cu, Mg, Ni, and Co; X comprises Si; Y comprises one or more elements selected from the group consisting of F, S, and N; and a, b, c, d are 0≤a<1, 0≤b<1, 0≤c<1, 0≤d<4, respectively.

11. The method according to claim 1, wherein the cathode active material is composed of 99 mol% or more or 100 mol% of a single crystal.

12. The method according to claim 1, wherein, based on 100 mol% in total of the divalent and trivalent iron compounds, the cathode active material comprises the trivalent iron compound in an amount of less than 1 mol% or 0 mol% according to XRD analysis or electron paramagnetic resonance (EPR) analysis.

13. A recycled cathode active material represented by Chemical Formula 1 below and composed of 99 mol% or more or 100 mol% of a single crystal.
[Chemical Formula 1] Li₁₋ₐMₐFe_{1-b}N_{b}P_{1-c}X_{c}O_{4-d}Y_{d},
wherein M comprises one or more elements selected from the group consisting of Nb, Al, Na, Ti, Zr, and K; N comprises one or more elements selected from the group consisting of Mo, V, Mn, Sm, Eu, Yb, Cu, Mg, Ni, and Co; X comprises Si; Y comprises one or more elements selected from the group consisting of F, S, and N; and a, b, c, d are 0≤a≤0.5, 0≤b≤0.5, 0≤c≤0.5, 0≤d≤0.1, respectively.

14. A secondary battery comprising the recycled cathode active material according to claim 13.
